# EUROPÄISCHE PATENTANMELDUNG

(11) **EP 1 078 870 A2**
(43) Veröffentlichungstag der Anmeldung: **28.02.2001**
(21) Anmeldenummer: 00115960.7
(22) Anmeldetag: 26.07.2000
(51) Int. Cl.: B65G 25/02

(54) **Stückgutförderer**

(30) Priorität: 31.07.1999 DE 19936255
(71) Anmelder: Nagel, Rolf, D-71101 Schönaich (DE)
(72) Erfinder: Nagel, Rolf, D-71101 Schönaich (DE)
(74) Vertreter: Schiering, Hans, Dipl.-Ing.

(57) **Zusammenfassung**

Der Stückgutförderer (10) ermöglicht mit einfachen Mitteln eine schnelle Umstellung auf in den Abmessungen, im Gewicht und in der Empfindlichkeit stark unterschiedliche Transportgegenstände (11).

Dazu ist ein Linearmotor (19) starr mit den in Transportrichtung vorderen Stückgutmitnehmern (21) der Greifer (21,22) und ein zweiter Linearmotor (20) starr mit den in Transportrichtung hinteren Stückgutmitnehmern (22) der Greifer (21,22) gekoppelt, ist ein NC-Längenmeßsystem (23) zum großhubigen gemeinsamen Hin- und Herbewegen und zum kleinhubigen Gegen- und Auseinanderbewegen der beiden Linearmotoren (19,20) eingerichtet und sind die Greifer (21,22) zusammen mit den beiden Linearmotoren (19,20) und dem NC-Längenmeßsystem (23) quer zur Transportbahn der Transportgegenstände (11) von einem weiteren Antrieb (17) zwischen einer Einrückstellung und einer Ausrückstellung (B) bewegbar.

Der Stückgutförderer (10) läßt sich in den verschiedenartigsten Bereichen einsetzen, beispielsweise in der Blechbearbeitung, in der Holzbearbeitung, in der Leiterplattenbestückung, in Schleifmaschinen oder in Verpackungsmaschinen.

## Beschreibung

Die Erfindung bezieht sich auf einen Stückgutförderer, bei dem jeweils abmessungsgleiche Transportgegenstände einzeln in geradlinig und abstandsgleich aufeinanderfolgende Aufenthaltsstationen gelangen und wenigstens zwei zum Fassen und Wiederfreigeben der Transportgegenstände eingerichtete und zwischen benachbarten Aufenthaltsstationen der Transportgegenstände mittels eines an einem NC-Längenmeßsystem geführten gemeinsamen Linearmotors hin- und herbewegbare Greifer vorgesehen sind.

Derartige Stückgutförderer werden in den verschiedenartigsten Bereichen eingesetzt, beispielsweise in der Blechbearbeitung, in der Holzbearbeitung, in der Leiterplattenbestückung, in Schleifmaschinen oder in Verpackungsmaschinen. Die Verwendung von im Prinzip durch die Magnetschwebebahn bekannten Linearmotoren hat den Vorteil der Vermeidung verschleißbehafteter mechanischer Komponenten eines rotatorischen Elektromotors und eines nachfolgenden Getriebes, was sich in geringeren Wartungskosten und in selteneren Stillstandszeiten niederschlägt. Zudem bietet der Linearmotor ein sehr gutes Positionierverhalten und ermöglicht in dem Stückgutförderer hohe Verfahrgeschwindigkeiten und hohe Beschleunigungen. Das dem Linearmotor zugeordnete NC-Längenmeßsystem arbeitet vorzugsweise nach dem photoelektrischen Meßprinzip mit einer Gitterteilung auf einem Glas- oder Stahlträgerkörper als Maßverkörperung.

Stückgutförderer der eingangs angeführten Art sind bereits vom Maschinenmarkt her bekannt. Ihre Greifer sind vorzugsweise durch eine zur Transportbahn der Transportgegenstände parallele Greiferschiene miteinander verbunden. Wenn ein Wechsel der Abmessung der Transportgegenstände in der Transportrichtung oder ein genereller Wechsel der von Aufenthaltsstation zu Aufenthaltsstation weiterzubefördernden Gegenstände ansteht, sind an den Greifern bauliche Umrüstmaßnahmen erforderlich, die unerwünschte Stillstandszeiten und höhere Gestehungskosten des Stückgutförderers zur Folge haben. Außer der Flexibilität in der Anpassung an unterschiedliche Abmessungen der Transportgegenstände fehlt zumeist auch eine Anpassungsmöglichkeit an unterschiedlich schwere und an unterschiedlich empfindliche Transportgegenstände.

Der Erfindung liegt die Aufgabe zugrunde, bei einem Stückgutförderer der eingangs angeführten Gattung mit einfachen Mitteln eine schnelle Umstellung auf in den Abmessungen, im Gewicht und in der Empfindlichkeit stark unterschiedliche Transportgegenstände zu ermöglichen.

Diese Aufgabe wird erfindungsgemäß dergestalt gelöst, daß statt des einen Linearmotors zwei Linearmotoren vorgesehen sind, von denen der eine Linearmotor starr mit den in Transportrichtung vorderen Stückgutmitnehmern der Greifer und der andere Linearmotor starr mit den in Transportrichtung hinteren Stückgutmitnehmern der Greifer gekoppelt ist, daß das NC-Längenmeßsystem zum großhubigen gemeinsamen Hin- und Herbewegen der beiden Linearmotoren und zum kleinhubigen Gegen- und Auseinanderbewegen der beiden Linearmotoren eingerichtet ist und daß die Greifer zusammen mit den beiden Linearmotoren und dem NC-Längenmeßsystem quer zur Transportbahn der Transportgegenstände von einem weiteren Antrieb zwischen einer Einrückstellung und einer Ausrückstellung bewegbar sind.

Demnach werden der zum Hin- und Herbewegen der Greifer zwischen zwei benachbarten Aufenthaltsstationen der Transportgegenstände bestimmte erste Linearmotor und das ihm zugeordnete NC-Längenmeßsystem einem zusätzlichen Zweck zugeführt, nämlich dem Schließen und Öffnen der Greifer. Letzteres geschieht jedoch ausschließlich in der Transportrichtung und der Transportgegenrichtung, weshalb die Greifer zusammen mit den beiden Linearmotoren und dem NC-Längenmeßsystem quer zur Transportbahn der Transportgegenstände von einem weiteren Antrieb zwischen einer Einrückstellung und einer Ausrückstellung bewegbar sind. Mit alledem arbeitet der Stückgutförderer in einem Sechsertakt, bestehend aus dem Querfahren von einer Startbereitschaft in die Einrückstellung, dem Schließen der Greifer durch gegenläufiges Verfahren der beiden Linearmotoren, dem gemeinsamen Längsfahren der beiden Linearmotoren in der Transportrichtung, dem Öffnen der Greifer durch gegenläufiges Verfahren der beiden Linearmotoren, dem Querfahren in die Ausrückstellung und dem gemeinsamen Längsfahren der beiden Linearmotoren in der Transportgegenrichtung.

Der erfindungsgemäße Stückgutförderer hat noch den zusätzlichen Vorteil, daß sich einer der beiden Stückgutmitnehmer der Greifer besonders präzise für eine Anschlagfläche der jeweiligen Transportgegenstände positionieren läßt und der andere Stückgutmitnehmer der Greifer in der Spannkraft an das Gewicht oder die Empfindlichkeit der jeweils zu befördernden Gegenstände weitreichend anpaßbar ist. Dies gilt insbesondere für den Fall, daß die in Transportrichtung vorderen Stückgutmitnehmer sämtlicher Greifer oder die in Transportrichtung hinteren Stückgutmitnehmer sämtlicher Greifer mit einem auf einer Druckfeder abgestützten Spannbacken versehen sind. Die mit der Erfindung erzielten Vorteile bestehen aber auch darin, daß bei einem Wechsel der Transportgegenstände ein zeitaufwendiger und kostenträchtiger Austausch oder Umbau der Greifer entfällt.

Ein aufgrund der in den Unteransprüchen angegebenen Erfindungsausgestaltungen bevorzugtes Ausführungsbeispiel der Erfindung ist in der teilweise schematischen Zeichnung dargestellt und wird im folgenden näher beschrieben. Es zeigt
- Fig. 1: den Stückgutförderer in seiner Grundstellung mit ausgerückten und gespreizten Greifern,
- Fig. 2: den Stückgutförderer am Ende seiner Transportbewegung und
- Fig. 3: die genauere Detailwiedergabe eines Greifers.

Der in der Zeichnung wiedergegebene Stückgutförderer 10 ist für vier geradlinig und abstandsgleich aufeinanderfolgende Aufenthaltsstationen der Transportgegenstände 11 ausgelegt, nämlich eine reine Eingabestation 12, eine erste Bearbeitungsstation 13, eine zweite Bearbeitungsstation 14 und eine reine Entnahmestation 15. Diese vier Aufenthaltsstationen befinden sich auf dem Maschinenbett einer in der Zeichnung nicht mit dargestellten Maschine, beispielsweise einer Blechbearbeitungsmaschine. Sämtliche zum Bewegen in die Transportrichtung und in die Transportgegenrichtung vorgesehenen Teile des Stückgutförderers 10 sind auf einem Support 16 montiert, der von dem Querantrieb 17 über dem Maschinenbett der in der Zeichnung nicht mit dargestellten Maschine seinerseits einer hin- und hergehenden Bewegung unterzogen wird.

Der Querantrieb 17 besteht aus zwei auf gegenseitigen Abstand gehaltenen und gleichgeschalteten weiteren Linearmotoren, um die Querantriebskräfte für einen weniger störungsanfälligen Querlauf zu verteilen und um die einleitend angeführten Vorteile von Linearmotoren auch an dieser Stelle zu nutzen. Jeder der beiden weiteren Linearmotoren hat zu seiner Führung ein vergleichsweise kurzes eigenes NC-Längenmeßsystem 18. Damit läßt sich der Querhub des Stückgutförderers 10 zwischen der Einrückstellung A und der Ausrückstellung B schnell und bequem vom Steuerpult der dem Stückgutförderer 10 zugeordneten Maschine aus an andere Abmessungen der Transportgegenstände 11 anpassen.

Von den beiden auf dem Support 16 montierten Linearmotoren 19 und 20 ist der Linearmotor 19 starr mit den in Transportrichtung vorderen Stückgutmitnehmern 21 der Greifer 21,22 gekoppelt und der Linearmotor 20 starr mit den in Transportrichtung hinteren Stückgutmitnehmern 22 der Greifer 21,22 gekoppelt. Um den Platzbedarf der beiden Linearmotoren 19 und 20 klein zu halten und damit auch den Längenbedarf für das den beiden Linearmotoren 19 und 20 gemeinsam zugeordnete NC-Längenmeßsystem 23 zu beschränken, ist einer der hinteren Stückgutmitnehmer 22 unmittelbar an dem vorderen Linearmotor 20 nahe an dessen vorderem Ende seitlich abstehend befestigt und der vordere Stückgutmitnehmer 21 des rückwärts benachbarten Greifers 21,22 unmittelbar an dessen hinterem Ende seitlich abstehend befestigt. In Ergänzung dazu ist bei drei oder mehr Greifern 21,22 zur starren Kopplung des vorderen Linearmotors 20 mit den restlichen hinteren Stückgutmitnehmern 22 eine gemeinsame erste sich in Transportrichtung erstreckende Verbindungsstange 24 und zur starren Kopplung des hinteren Linearmotors 19 mit den restlichen vorderen Stückgutmitnehmern 21 eine gemeinsame zweite sich in Transportrichtung erstreckende Verbindungsstange 25 eingesetzt.

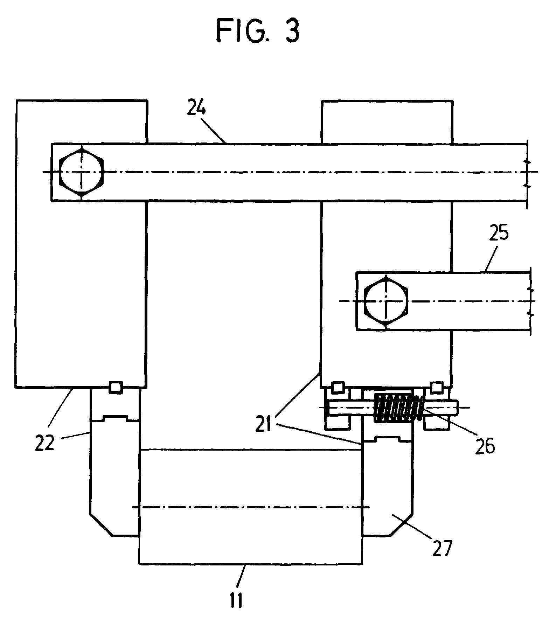

Von den beiden Stückgutmitnehmern 21 und 22 sämtlicher Greifer 21,22 lassen sich die in Transportrichtung hinteren Stückgutmitnehmer 22 besonders präzise für eine Anschlagfläche der jeweiligen Transportgegenstände 11 positionieren, wogegen die in Transportrichtung vorderen Stückgutmitnehmer 21 gemäß Fig. 3 mit einem auf einer Druckfeder 26 abgestützten Spannbacken 27 versehen sind. Damit kann die Spannkraft der Greifer 21,22 über die Steuerung der beiden zum Spannen mitbenutzten Linearmotoren 19 und 20 weitreichend an das Gewicht oder die Empfindlichkeit der jeweiligen Transportgegenstände 11 angepaßt werden.

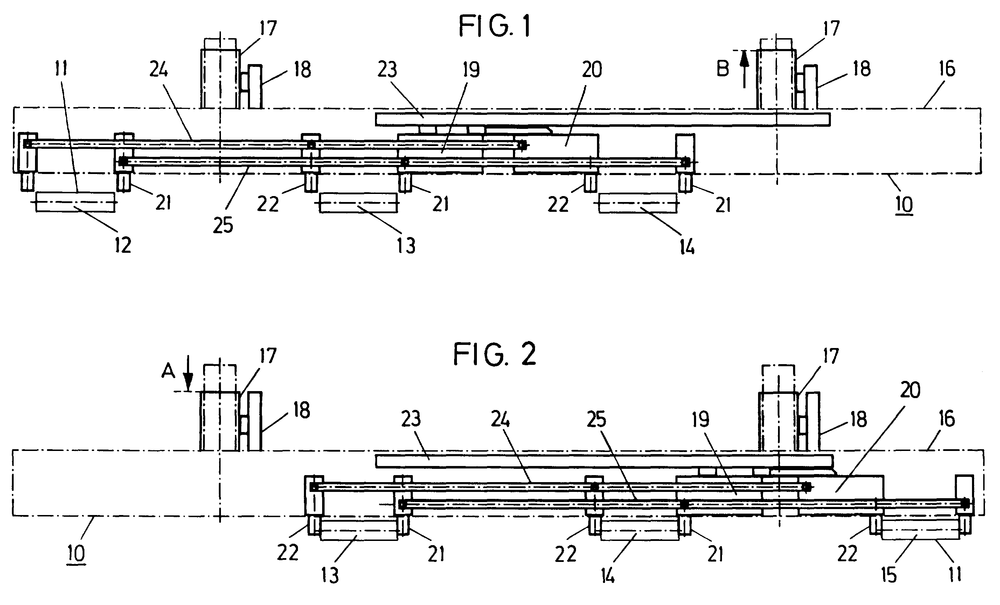

Nachdem ein neuer Transportgegenstand 11 in die Eingabestation 12 gelangt ist, bewegt der Querantrieb 17 den Support 16 von der in Fig. 1 dargestellten Startbereitschaft des Stückgutförderers 10 in die Einrückstellung A. Danach erfolgt das Einspannen der Transportgegenstände 11 in den Greifern 21,22 durch das Auseinanderfahren der beiden Linearmotoren 19 und 20. Als nächster Schritt schließt sich das gemeinsame Längsverfahren der beiden Linearmotoren 19 und 20 an, was zu der in Fig. 2 dargestellten Situation führt. Der nächste Bewegungsschritt des Stückgutförderers 10 besteht aus dem Öffnen der Greifer 21,22 durch ein Wiederzusammenfahren der beiden Linearmotoren 19 und 20. Nach dem Rückwärtsfahren des Supports 16 mittels des Querantriebs 17 in die Ausrückstellung B wird der in die Entnahmestation 15 gelangte Transportgegenstand 11 vorzugsweise automatisch entfernt. Der letzte Bewegungsschritt im Sechsertakt des Stückgutförderers 10 basiert auf dem gemeinsamen Längsfahren der beiden Linearmotoren 19 und 20 in der Transportgegenrichtung, worauf wieder die in Fig. 1 gezeigte Situation entsteht.

## Patentansprüche

1. Stückgutförderer (10), bei dem jeweils abmessungsgleiche Transportgegenstände (11) einzeln in geradlinig und abstandsgleich aufeinanderfolgende Aufenthaltsstationen (12,13,14) gelangen und wenigstens zwei zum Fassen und Wiederfreigeben der Transportgegenstände eingerichtete und zwischen benachbarten Aufenthaltsstationen der Transportgegenstände mittels eines an einem NC-Längenmeßsystem (23) geführten gemeinsamen Linearmotors (19) hin- und herbewegbare Greifer (21,22) vorgesehen sind, **dadurch gekennzeichnet,** daß statt des einen Linearmotors zwei Linearmotoren (19,20) vorgesehen sind, von denen der eine Linearmotor (19) starr mit den in Transportrichtung vorderen Stückgutmitnehmern (21) der Greifer (21,22) und der andere Linearmotor (20) starr mit den in Transportrichtung hinteren Stückgutmitnehmern (22) der Greifer (21,22) gekoppelt ist, daß das NC-Längenmeßsystem (23) zum großhubigen gemeinsamen Hin- und Herbewegen der beiden Linearmotoren (19,20) und zum kleinhubigen Gegen- und Auseinanderbewegen der beiden Linearmotoren (19,20) eingerichtet ist und daß die Greifer (21,22) zusammen mit den beiden Linearmotoren (19,20) und dem NC-Längenmeßsystem (23) quer zur Transportbahn der Transportgegenstände (11) von einem weiteren Antrieb (17) zwischen einer Einrückstellung (A) und einer Ausrückstellung (B) bewegbar sind.

2. Stückgutförderer nach Anspruch 1, dadurch gekennzeichnet, daß einer der hinteren Stückgutmitnehmer (22) unmittelbar an dem vorderen Linearmotor (20) nahe an dessen vorderem Ende seitlich abstehend befestigt ist und der vordere Stückgutmitnehmer (21) des rückwärts benachbarten Greifers (21,22) unmittelbar an dem hinteren Linearmotor (19) nahe an dessen hinterem Ende seitlich abstehend befestigt ist.

3. Stückgutförderer nach Anspruch 2, dadurch gekennzeichnet, daß bei drei oder mehr Greifern (21,22) zur starren Kopplung des vorderen Linearmotors (20) mit den restlichen hinteren Stückgutmitnehmern (22) eine gemeinsame erste sich in Transportrichtung erstreckende Verbindungsstange (24) und zur starren Kopplung des hinteren Linearmotors (19) mit den restlichen vorderen Stückgutmitnehmern (21) eine gemeinsame zweite sich in Transportrichtung erstreckende Verbindungsstange (25) eingesetzt ist.

4. Stückgutförderer nach einem der Ansprüche 1 bis 3, dadurch gekennzeichnet, daß in der Folge der Aufenthaltsstationen zwei oder mehr Bearbeitungsstationen (13,14) zwischen einer reinen Eingabestation (12) und einer reinen Entnahmestation (15) vorgesehen sind.

5. Stückgutförderer nach einem der Ansprüche 1 bis 4, dadurch gekennzeichnet, daß der Querantrieb (17) aus zwei auf gegenseitigen Abstand gehaltenen und gleichgeschalteten weiteren Linearmotoren besteht.

6. Stückgutförderer nach einem der Ansprüche 1 bis 5, dadurch gekennzeichnet, daß die in Transportrichtung vorderen Stückgutmitnehmer (21) sämtlicher Greifer (21,22) oder die in Transportrichtung hinteren Stückgutmitnehmer (22) sämtlicher Greifer (21,22) mit einem auf einer Druckfeder (26) abgestützten Spannbacken (27) versehen sind.
